# EUROPÄISCHE PATENTSCHRIFT

(11) **EP 2 730 158 B1**
(45) Veröffentlichungstag und Bekanntmachung des Hinweises auf die Patenterteilung: **14.09.2016**
(21) Anmeldenummer: 13191817.9
(22) Anmeldetag: 06.11.2013
(51) Int. Cl.: A01G 9/24, A01K 1/00

(54) **Gebäude mit einem Firstsystem und System und Verfahren zur Steuerung der Belüftung des Gebäudes**
Building with a roof ridge system and system and method for controlling the ventilation of the building
Bâtiment doté d'un système de faîtage et système et procédé de commande de l'aération du bâtiment

(30) Priorität: 12.11.2012 DE 102012110842
(43) Veröffentlichungstag der Anmeldung: 14.05.2014
(73) Patentinhaber: AGROTEL GmbH, 94152 Neuhaus am Inn (DE)
(72) Erfinder: Laner, Cyriak, 94152 Neuhaus am Inn (DE)
(74) Vertreter: Benninger, Johannes

(56) Entgegenhaltungen:
- EP-A1- 0 827 686
- DE-A1-102005 052 247
- FR-A2- 2 128 020
- FR-A5- 2 151 511
- US-A- 4 078 721
- US-A- 4 672 889
- US-A- 5 655 335

## Beschreibung

Die vorliegende Erfindung betrifft eine Firstsystems zur Entlüftung von landwirtschaftlichen und /oder industriell genutzten Gebäuden und ein System und ein Verfahren zur Steuerung eines Firstsystems gemäß den Merkmalen der Oberbegriffe der Ansprüche 1, 9 und 10. Weiterhin betrifft die Erfindung ein landwirtschaftliches Gebäude mit einem Firstsystems zur Entlüftung sowie ein System und ein Verfahren zur Steuerung der Belüftung des landwirtschaftlichen Gebäudes gemäß den Merkmalen der Oberbegriffe der Ansprüche 9, 13 und 14.

### Stand der Technik

Im landwirtschaftlichen und /oder industriellen Bereich ist eine gute Durchlüftung der Gebäude wichtig, damit ein gutes Raumklima in den Gebäuden herrscht. Beispielsweise ist eine gute Durchlüftung in Ställen und Gewächshäusern von großer Bedeutung, um zu verhindern, dass sich Feuchtigkeit ansammelt und somit ein unvorteilhaftes feuchtes Klima entsteht, was die Anfälligkeit der Tiere und Pflanzen für Krankheiten begünstigen würde.

Im Stand der Technik sind insbesondere einseitig zu öffnende Dachöffnungen bekannt, durch die ein seitlicher Luftaustausch erfolgen kann. Beispielsweise beschreibt US 4,815,365 A ein Gewächshaus, bei dem ein Teil des Daches angehoben werden kann.

DE 93 19 277 U1 beschreibt einen Dachfirst für Stallbauten. Hierbei sind oberhalb einer Entlüftungsöffnung lichtdurchlässige Abdeckplatten angeordnet, die nach oben ausschwenkbar sind. Die Abdeckplatten werden über Stützelemente gehalten, welche mit Zahnstangen gelenkig verbunden sind. Die Zahnstangen stehen mit Zahnrädern auf Antriebswellen in Eingriff. Über Rotation der Antriebswellen können die Abdeckplatten geschwenkt werden, so dass seitliche Entlüftungsöffnungen entstehen.

Darüber hinaus beschreibt EP 1, 243,176 B1 eine Firstentlüftungsvorrichtung für Ställe, bei der zwei Schwenkklappen über eine gemeinsame Antriebswelle verbunden sind und eine nach oben freie Entlüftungsöffnung bilden.

Weiterhin ist aus US 5,655,335 ein Gewächshaus bekannt, wobei ein Dachfirst aus zwei sich gegenüberliegenden Fenstern gebildet wird, welche mit dem Ziel der Innenklimabeeinflussung angesteuert werden können. Die Rahmen können dabei mit einer flexiblen Folie bespannt werden.

Aufgabe der Erfindung ist es, ein variables System und Verfahren zu entwickeln, das eine optimale Belüftung von landwirtschaftlichen und / oder industriell genutzten Gebäuden ermöglicht.

Die obige Aufgabe wird durch ein Firstsystem zur Entlüftung von Gebäuden sowie einem System und einem Verfahren zur Steuerung des Firstsystems gelöst, die die Merkmale in den Patentansprüchen 1, 9 und 10 umfassen. Die obige Aufgabe wird weiterhin durch ein Gebäude mit einem Firstsystems zur Entlüftung sowie einem System und einem Verfahren zur Steuerung der Belüftung gelöst, die die Merkmale in den Patentansprüchen 9, 13 und 14 umfassen. Weitere vorteilhafte Ausgestaltungen werden durch die jeweiligen Unteransprüche beschrieben.

### Beschreibung

Die Erfindung betrifft ein Firstsystem für ein Gebäudedach für landwirtschaftliche und / oder industriell genutzte Gebäude insbesondere für Ställe, Gewächshäuer oder dergleichen, das eine optimale Belüftung des Gebäudes ermöglicht. Das Firstsystem umfasst zwei einander gegenüberliegend angeordnete, zumindest teilweise den Firstbereich des Gebäudedaches bildende Lüftungselemente. Diese sind jeweils um eine eigene Achse schwenkbeweglich gelagert und können mehrere Relativpositionen zueinander einnehmen. Bei einer ersten eingenommenen Relativposition bilden die beiden Lüftungselemente miteinander eine weitgehend geschlossene Dachoberfläche. Bei mindestens einer zweiten eingenommenen Relativposition bilden die beiden Lüftungselemente miteinander eine nach oben offene Entlüftungsöffnung aus.

Erfindungsgemäß bestehen die Lüftungselemente jeweils aus einer Trägerkonstruktion, die mit einer flexiblen Flächenbahn bespannt ist. Die Trägerkonstruktion eines Lüftungselementes ist jeweils als einseitig offener Rahmen ausgebildet. Die Trägerkonstruktion besteht aus einer dachseitig angeordneten Längsstrebe und jeweils mindestens zwei orthogonal zur Längsstrebe angeordneten Querstreben.

Die Querstreben der Trägerkonstruktion sind vorzugsweise gebogen ausgebildet. Insbesondere weisen die Querstreben jeweils eine nach außen weisende konvexe Krümmung über ihre gesamte Länge auf. Die über die Trägerkonstruktion gespannte flexible Flächenbahn bildet aufgrund der gekrümmten Form der Querstreben eine konvex gekrümmte Außenfläche der Lüftungselemente.

Als flexible Flächenbahn wird beispielsweise eine winddichte, reißfeste Plane verwendet. Vorzugsweise besteht die Flächenbahn aus einem transparenten, lichtdurchlässigen Material. Gemäß einer weiteren Ausführungsform wird als flexible Flächenbahn eine weiße oder ähnlich helle, lichtdurchlässige Membran verwendet, die vorzugsweise keine oder nur eine geringe Wärmedurchlässigkeit aufweist. Insbesondere kann ein Material mit wärmereflektierenden Eigenschaften verwendet werden, um die Einflüsse der Außentemperatur auf die Innentemperatur weitgehend zu minimieren.

Die Flächenbahn ist lösbar an der Trägerkonstruktion der Lüftungselemente befestigt. Die jeweilige flexible Flächenbahn umfasst wenigstens ein erstes Fixierelement, welches zur Bespannung ihrer zugeordneten Trägerkonstruktion in ein korrespondierendes Fixierelement der Trägerkonstruktion einsetzbar oder einführbar ist. Vorzugsweise umfasst die Flächenbahn an einer ihrer Längsseiten eine Randverstärkung, insbesondere einen Keder. Dieser Keder dient als erstes Fixierelement bzw. Haltemittel. Die Trägerkonstruktion umfasst mindestens ein korrespondierendes Fixierelement, in das das Haltemittel, d.h. der Keder, einsetzbar oder einführbar ist. Insbesondere umfasst jede Querstrebe an ihrem firstseitigen freien Ende ein Fixierelement mit einem Halteelement für den Keder. Gemäß einer Ausführungsform der Erfindung wird der Keder einer Flächenbahn durch alle Halteelemente aller Querstreben, die einer Längsstrebe eines Lüftungselementes zugeordnet sind, geführt und gehalten.

Die Trägerkonstruktion umfasst jeweils eine dachseitig angeordnete Längsstrebe und eine Mehrzahl von in Richtung des Dachfirsts weisende Querstreben. Die jeweiligen Längs- und Querstreben bilden gemeinsam einen einseitig offenen Rahmen mit resultierender Rahmenöffnung, wobei die Rahmenöffnung vollständig durch die jeweilige der Trägerkonstruktion zugeordnete flexible Flächenbahn überdeckt ist. Die firstseitig offene Rahmenseite wird dabei durch das Haltemittel der flexiblen Flächenbahn verschlossen.

Das mindestens eine Fixierelement der Trägerkonstruktion ist jeweils dem firstseitigen freien Ende jeder Querstrebe zugeordnet. Die flexible Flächenbahn wird in den Fixierelementen der Trägerkonstruktion fixiert, über die Querstreben gespannt und im dachseitigen Bereich der Längsstrebe an dieser oder an der Dachkonstruktion des Gebäudedaches fixiert. Insbesondere wird die flexible Flächenbahn bei der Montage gestrafft und außenseitig über die Trägerkonstruktion gespannt.

Beispielsweise ist ein solches Fixierelement in Form eines so genannten Z- Profils mit einem zusätzlichen Mittelsteg ausgebildet. Der zusätzliche Mittelsteg ist insbesondere parallel zur Oberlinie und zur Unterlinie des Z angeordnet und befindet sich vorzugsweise auf derselben Seite der mittleren Verbindungslinie wie die firstseitig angeordnete des Z. Das Fixierelement wird so auf das freie Ende einer Querstrebe der Trägerkonstruktion des Lüftungselements aufgesteckt, dass sich die Querstrebe zwischen dem zusätzlichen Mittelsteg und der auf derselben Seite angeordneten Linie des Z befindet. Beispielsweise kann das freie Ende der Querstrebe so dimensioniert und geformt sein, dass es formschlüssig und gegebenenfalls kraftschlüssig zwischen den Mittelsteg und der Linie des Z eingeschoben werden kann. Dem zusätzlichen Mittelsteg ist oberhalb, zwischen Mittelsteg und Verbindungslinie ein Halteelement für den Keder der Flächenbahn zugeordnet. Das Fixierelement wird so an dem firstseitigen freien Ende der Querstrebe angeordnet, dass sich die das Halteelement bzw. die Kederhalterung auf der Oberseite des Lüftungselements befindet. Die flexible Plane kann somit über eine Mehrzahl von an einer Mehrzahl an Querstreben angeordneten Fixierelementen außenseitig auf die Trägerkonstruktion gespannt werden. Die Befestigung der Plane am Fixierelement erfolgt insbesondere werkzeugfrei, das heißt es müssen keine Schrauben oder ähnlich gelöst und / oder festgezogen werden, sondern der Keder wird einfach in die Kederhalterung des Fixierelementes eingeschoben.

Dachseitig ist ebenfalls eine leicht lösbare Befestigung der die Lüftungsöffnung abdeckenden Plane vorgesehen. Zusammen stellt dies ein Schnellwechsel- System dar, bei dem die Bespannung der Lüftungsöffnung schnell, einfach und vorzugsweise werkzeugfrei ausgetauscht werden kann. Beispielsweise kann somit im Sommer eine helle Abdeckung gewählt werden, die ein geringeres Aufheizen des Innenraumes des landwirtschaftlichen Gebäudes bewirkt. Im Winter dagegen kann die Lüftungsöffnung vorzugsweise mit einer dunklen Abdeckung bespannt werden, die die Sonnenstrahlung absorbiert und somit zu einer Erwärmung des Innenraumes des Gebäudes führt.

Erfindungsgemäß weisen die Querstreben eine gebogene Form auf, insbesondere bilden die einen Querstreben zweier geschlossener Lüftungselemente einen Teilradius. Die Querstreben weisen eine jeweils konvexe Außenoberfläche auf. Die einander gegenüberliegenden Querstreben eines Firstsystems beschreiben im geschlossenen Zustand der Lüftungselemente weitgehend einen Teilumfang eines Kreises. Das erste, dachseitige Ende der Querstrebe dient der Anlenkung an der Dachkonstruktion des Gebäudedaches. Das zweite, firstseitige Ende der Querstrebe umfasst jeweils ein Fixierelement für die flexible Flächenbahn. Im geschlossenen Zustand der Lüftungselemente können sich die Fixierelemente der einander gegenüber liegend angeordneten Lüftungselemente zumindest weitgehend berühren. Es kann aber auch vorgesehen sein, dass die Fixierelemente auch im geschlossenen Zustand zumindest geringfügig beabstandet sind, so dass der Gebäudedachfirst nicht vollständig verschlossen werden kann.

Aufgrund der gebogenen Form ist kein herkömmlich bekannter First ausgebildet. Stattdessen ist die Dachfläche im Bereich der Lüftungselemente weitgehend stromlinienförmig ausgebildet, so dass in diesem Bereich eine verbesserte Luftführung insbesondere bei höhen Windstärken gegeben ist. Dadurch wird die Gefahr minimiert, dass bei hohen Windstärken die Lüftungselemente aufgerissen und beschädigt werden, das heißt die flexible Abdeckung der Lüftungselemente ist windsicher und insbesondere vor Flatterschäden geschützt. Dies erhöht die Lebensdauer der Abdeckung, die nicht mehr so häufig repariert oder ausgetauscht werden muss, was zu einer Kostenreduktion führt. Die gebogene Form der Querstreben bewirkt weiterhin eine erhöhte Stabilität der durch die Lüftungselemente gebildeten Dachflächen. Beispielsweise kann die flexible Abdeckung der Lüftungselemente durch die gebogene Form höhere Schneelasten aushalten. Die einander gegenüberliegend angeordneten Lüftungselemente sind vorzugsweise unabhängig voneinander schwenkbar und somit unabhängig voneinander einstellbar. Insbesondere ist jedes der Lüftungselemente für eine Schwenkbewegung über ein Stellglied mit einem eigenen Antrieb gekoppelt, wobei die Lüftungselemente im Bereich ihrer jeweiligen Schwenkachse dachseitig an einer Dachkonstruktion des Gebäudedaches befestigt sind. Dadurch kann die Größe bzw. Breite der Entlüftungsöffnung im Gebäudedach einfach reguliert werden. Weiterhin ist es möglich, eine Richtung der Entlüftungsöffnung einzustellen und die Entlüftungsöffnung somit gezielt an die jeweiligen Wetterbedingungen, insbesondere an die Wind- und / oder Regenrichtung anzupassen.

Gemäß einer Ausführungsform der Erfindung erstreckt sich das erfindungsgemäße Firstsystem entlang der kompletten Firstlänge des Gebäudes. Gemäß einer alternativen Ausführungsform der Erfindung ist nicht eine durchgängige Entlüftungsöffnung im Firstbereich vorgesehen. Stattdessen kann das Firstsystem auch in Gebäudedächern mit zumindest teilweise geschlossenen Firstbereichen eingesetzt werden und voneinander getrennte Entlüftungsöffnungen abdecken. Insbesondere kann hierbei vorgesehen sein, dass die voneinander beabstandeten Lüftungselemente auf einer Firstseite alle über eine gemeinsame Antriebswelle angesteuert werden können, so dass die Bewegung der Lüftungselemente einer Firstseite miteinander gekoppelt ist. Dementsprechend können die voneinander beabstandeten Lüftungselemente auf der anderen Firstseite ebenfalls alle über eine gemeinsame Antriebswelle angesteuert und somit miteinander gekoppelt werden. Allerdings sind die Lüftungselemente einer Firstseite unabhängig von den Lüftungselementen der anderen Firstseite ansteuerbar.

Gemäß einer weiteren Ausführungsform überragt eines der Lüftungselemente das andere zumindest teilweise. Insbesondere sind die Lüftungselemente nicht spiegelsymmetrisch zum Dachfirst aufgebaut Alternativ sind die Lüftungselemente zwar weitgehend spiegelsymmetrisch aufgebaut, aber so angeordnet, dass nicht der Dachfirst, sondern eine Parallele dazu die Spiegelachse bildet. Gemäß einer ersten Ausführungsform sind die Querstreben des einen ersten Lüftungselements länger als die Querstreben des anderen zweiten Lüftungselements. In der ersten eingenommenen Relativposition, in der die Lüftungselements miteinander eine weitgehend geschlossene Dachoberfläche bilden, überragt das eine erste Lüftungselement das andere zweite Lüftungselement somit teilweise im Firstbereich. Die Bewegung bzw. Öffnung des zweiten Lüftungselements ist somit von der Bewegung bzw. Öffnung des ersten Lüftungselements zumindest teilweise abhängig, da das erste Lüftungselement zumindest teilweise geöffnet sein muss, damit das zweite Lüftungselement geöffnet werden kann. Eine solche Anordnung kann beispielsweise für Gebäude in Gegenden vorteilhaft sein, in der der Wind aufgrund der geographischen Lage immer aus einer bestimmten Richtung kommt.

Die Erfindung betrifft weiterhin ein System und ein Verfahren zur Steuerung eines oben beschriebenen Firstsystems. Das System umfasst mindestens einen Sensor und mindestens eine Steuerungseinheit, wobei der mindestens eine Sensor in und / oder außerhalb des Gebäudes, dem Gebäude zugeordnet, angeordnet ist. Die einander gegenüberliegend angeordneten Lüftungselemente des Firstsystems sind über die Steuerungseinheit unabhängig voneinander ansteuerbar. In Abhängigkeit der ermittelten physikalischen Parameter in und außerhalb des Gebäudes werden die Lüftungselemente unabhängig voneinander angesteuert. Insbesondere werden über die Steuerungseinheit die Antriebe angesteuert, die die Schwenkbewegung der Lüftungselemente kontrollieren.

Ermittelt das System anhand von Feuchtigkeitssensoren innerhalb des Gebäudes eine erhöhte Luftfeuchtigkeit, so kann in einer bevorzugten Ausführungsform - insbesondere bei gleichzeitig gemessener hoher Temperatur im Firstbereich - die Entlüftungsöffnung durch Aufschwenken der Lüftungselemente vergrößert. Gemäß einer bevorzugten Ausführungsform wird eine im Gebäude ermittelte Luftfeuchtigkeit mit einer außerhalb des Gebäudes ermittelten Luftfeuchtigkeit verglichen und die Lüftungselemente werden bei einer Abweichung von äußerer und innerer Luftfeuchtigkeit entsprechend angesteuert. Ermittelt das System anhand von Feuchtigkeitssensoren außerhalb des Gebäudes eine erhöhte Luftfeuchtigkeit, wie dies beispielsweise bei Regen der Fall ist, wird die Entlüftungsöffnung durch Zurückschwenken der Lüftungselemente verkleinert oder verschlossen.

Ermittelt der an einer Außenseite des Gebäudes zugeordnete Windmesser einen starken Wind aus einer bestimmten Richtung, so kann das Lüftungselement auf der windabgewandten Seite vorzugsweise weiter geschlossen werden als das Lüftungselement auf der windzugewandten Seite. Dadurch wird verhindert, dass der Wind das Lüftungselement auf der windabgewandten Seite nach oben hin wegreißt.

Insbesondere können das System und das Verfahren die Daten verwenden, die über Temperatursensoren, Feuchtigkeitssensoren, Windsensoren o.ä. ermittelt und an die Steuerungseinheit übermittelt werden. Es können jedoch weitere physikalische Parameter ermittelt und nach Auswertung durch die Steuerungseinheit zur Anpassung der Positionierung der Lüftungselemente verwendet werden.

Weiterhin betrifft die Erfindung ein landwirtschaftliches Gebäude mit mindestens einer großflächigen seitlichen Öffnung. Der mindestens einen großflächigen seitlichen Öffnung ist eine einstellbare Windschutzvorrichtung zugeordnet. Vorzugsweise weist das Gebäude mindestens zwei einander gegenüberliegende großflächige seitliche Öffnungen auf, die jeweils mit einer einstellbaren Windschutzvorrichtung verschlossen werden können. Gemäß einer weiteren Ausführungsform weisen alle vier Gebäudeseiten jeweils großflächige seitliche Öffnungen auf, die jeweils mit einer einstellbaren Windschutzvorrichtung verschlossen werden können. Das landwirtschaftliche Gebäude umfasst zusätzlich ein Firstsystem mit zwei einander gegenüberliegend angeordneten, zumindest teilweise den Firstbereich des Gebäudedaches bildenden Lüftungselementen. Die Lüftungselemente bestehen jeweils aus einer Trägerkonstruktion, die mit einer flexiblen Flächenbahn bespannt ist. Die Trägerkonstruktion eines Lüftungselementes ist jeweils als einseitig offener Rahmen ausgebildet ist und besteht aus einer dachseitig angeordneten Längsstrebe und jeweils mindestens zwei orthogonal zur Längsstrebe angeordneten Querstreben. Das Firstsystem wurde bereits ausführlich beschrieben.

Inner- und / oder außerhalb des Gebäudes sind Sensoren vorgesehen, die vorzugsweise mit einer dem Gebäude zugeordneten Steuerungseinheit gekoppelt sind. Die Steuerungseinheit steuert das Firstsystem und die Windschutzvorrichtungen. Insbesondere kann die Steuerungseinheit die Einstellung der Öffnungsgröße der mindestens einen seitlichen Öffnung und der Entlüftungsöffnung im Firstbereich steuern. Zudem kann vorgesehen sein, dass durch ein unterschiedliches Verschwenken der einander gegenüberliegend angeordneten Lüftungselemente eine so genannte Öffnungsrichtung der Entlüftungsöffnung eingestellt werden kann. Bei den Sensoren handelt es sich insbesondere um thermische Sensoren, Sensoren für die Luftfeuchtigkeit, Sensoren für die Windrichtung, die Windstärke o.ä. Dabei können Sensoren im Gebäude und / oder Sensoren außerhalb des Gebäudes angeordnet sein. Beispielsweise ist im Firstbereich ein Windsensor angeordnet, während Temperatursensoren im Gebäude im Bodenbereich und im Gebäude im Firstbereich und gegebenenfalls an der Außenwand des Gebäudes vorgesehen sind.

Insbesondere ist vorgesehen, dass das Öffnen bzw. Schließen der Entlüftungsöffnung im Firstbereich mit dem Öffnen bzw. Schließen der Windschutzvorrichtungen gekoppelt ist. Kommt beispielsweise ein starker Wind aus West, so würde die Windschutzvorrichtung auf der Westseite geschlossen werden. Das westliche Lüftungselement der Entlüftungsöffnung würde vorzugsweise zumindest teilweise geöffnet bleiben, während das östliche Lüftungselement geschlossen wird. Dadurch wird verhindert, dass der Wind das östliche Lüftungselement aufreißt. Weiterhin kann vorgesehen sein, dass bei hoher Luftfeuchtigkeit im Gebäude alle Windschutzvorrichtungen und Entlüftungsöffnungen geöffnet werden, sofern nicht die vorherrschenden Windstärken o.ä. dagegen sprechen.

Weiterhin betrifft die Erfindung ein System und ein Verfahren zur Steuerung der Belüftung eines soeben beschriebenen landwirtschaftlichen Gebäudes. Das System umfasst mindestens einen Sensor und mindestens eine Steuerungseinheit. Wie bereits dargestellt sind die Lüftungselemente des Firstsystems über die Steuerungseinheit unabhängig voneinander ansteuerbar. Dies erfolgt insbesondere aufgrund der physikalischen Parameter, die in und / oder außerhalb des Gebäudes ermittelt werden. Weiterhin kann die mindestens eine einer Seitenwand des Gebäudes zugeordnete Windschutzvorrichtung angesteuert werden.

Ermittelt die Sensorik beispielsweise starken Regen aus einer bestimmten Richtung, so kann durch die Steuerungseinrichtung der Öffnungswinkel der Lüftungselemente korrigiert werden, so dass das Lüftungselement auf der windabgewandter Seite weniger weit geöffnet ist. Zudem können die Windschutzvorrichtung auf der windzugewandten Gebäudeseite verschlossen und - wenn vorhanden - die Windschutzvorrichtung auf der windabgewandten Gebäudeseite weiter geöffnet werden.

Weiterhin sammelt sich häufig bei starker südseitiger Sonneneinstrahlung Feuchtigkeit in Bereich der Nordseite der landwirtschaftlich genutzten Gebäude. Um dies zu verhindern oder zumindest zu begrenzen, kann im Bereich der Nordseite ein weiterer Feuchtigkeitssensor angeordnet sein und bei entsprechendem Überschreiten von bestimmten Schwellenwerten an Luftfeuchtigkeit wird mindestens eine Windschutzvorrichtung auf der Nordseite des Gebäudes angesteuert und geöffnet.

Die Steuerung erfolgt anhand der Messwerte von mindestens einem Sensor. Insbesondere für eine genauere Einstellbarkeit wird eine Kombination aus mehreren unterschiedlichen Sensoren, die an unterschiedlichen Positionen innerhalb oder außerhalb des Gebäudes angeordnet sind, verwendet. Mit dem erfindungsgemäßen Firstsystem können sowohl Hallen mit flexibler oder fester Abdeckung, beispielsweise so genannte Planenhallen als auch Holzhallen, zur erleichterten Belüftung mit einer nach oben öffnenden Entlüftungsöffnung versehen werden, die einen guten und schnellen Abzug warmer feuchter Luft ermöglicht und somit schnell zu einer deutlichen Anpassung bzw. Verbesserung des Raumklimas innerhalb des Gebäudes führt.

### Figurenbeschreibung

Im Folgenden sollen Ausführungsbeispiele die Erfindung und ihre Vorteile anhand der beigefügten Figuren näher erläutern. Die Größenverhältnisse der einzelnen Elemente zueinander entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt die Anordnung eines erfindungsgemäßen Firstsystems auf einer Halle mit flexibler Eindeckung.
Figur 2 zeigt die Anordnung eines erfindungsgemäßen Firstsystems auf einer Halle mit fester Eindeckung.
Figur 3 zeigt ein Fixierelement für die flächige Bespannung der Trägerkonstruktion der Lüftungselemente eines Firstsystems gemäß vorliegender Erfindung.
Figuren 4 zeigen verschiedene Positionen der Lüftungselemente eines Firstsystems gemäß vorliegender Erfindung.
Figur 5 zeigt eine seitliche Darstellung der Trägerkonstruktion und Antriebsvorrichtung eines Firstsystems gemäß vorliegender Erfindung.
Figuren 6 zeigen verschiedene Detailansichten der Trägerkonstruktion und Antriebsvorrichtung eines Firstsystems gemäß vorliegender Erfindung.
Figuren 7 zeigen die Anordnung eines Firstsystems auf einem landwirtschaftlichen Gebäude.
Figur 8 zeigt eine Ausführungsform eines Firstsystems, in der das eine Lüftungselement das andere zumindest teilweise überragt.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

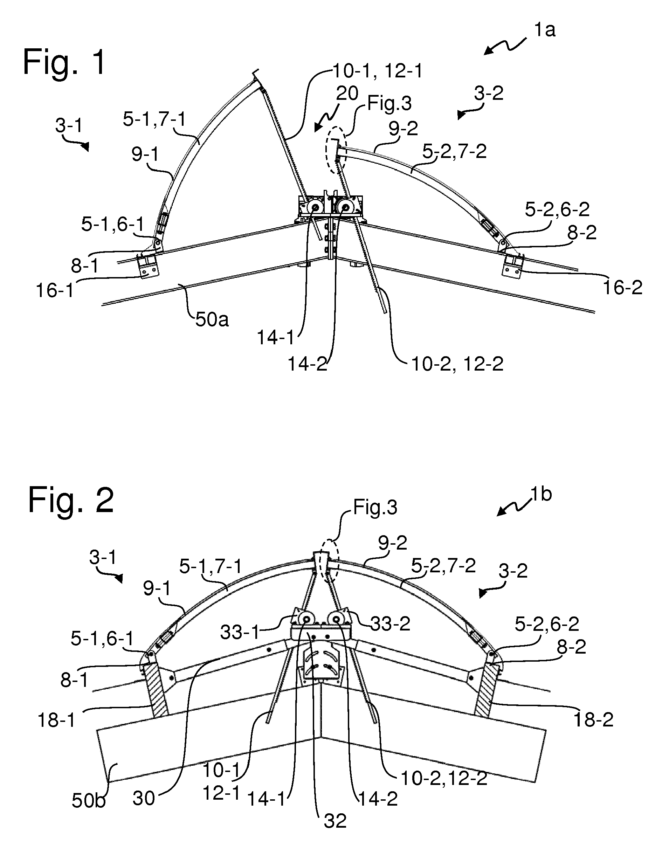

Figur 1 zeigt die Anordnung eines erfindungsgemäßen Firstsystems 1 a auf einer Halle mit flexibler Abdeckung, insbesondere einer mit Planen abgedeckten Halle (= Planenhalle) in einem teilweise geöffneten Zustand und Figur 2 zeigt die Anordnung eines erfindungsgemäßen Firstsystems 1 b auf einer Holzhalle, d.h. einer Halle mit einer festen Abdeckung, in einem geschlossenen Zustand. Bei der Planenhalle gemäß Figur 1 besteht die Dachkonstruktion 50a aus Stahlträgern o.ä., bei der Holzhalle gemäß Figur 2 besteht die Dachkonstruktion 50b dagegen aus einer Konstruktion aus Holzbalken.

Das Firstsystem 1 a, 1 b besteht aus zwei einander gegenüberliegend angeordneten, zumindest teilweise den Firstbereich des Gebäudedaches bildenden, schwenkbaren Lüftungselementen 3-1, 3-2. Die Lüftungselemente 3-1, 3-2 bestehen jeweils aus einer Trägerkonstruktion 5-1, 5-2, die mit einer flexiblen Plane 9-1, 9-2 bespannt ist. Insbesondere umfassen die Trägerkonstruktionen 5-1, 5-2 jeweils Längsstreben 6-1, 6-2 und Querstreben 7-1, 7-2. Insbesondere umfasst die Trägerkonstruktionen 5-1, 5-2 eines Lüftungselements 3-1, 3-2 jeweils eine dachseitig angeordnete Längsstrebe 6-1, 6-2 und jeweils mindestens zwei orthogonal an der Längsstrebe 6-1, 6-2 angeordnete Querstreben 7-1, 7-2. Diese bilden einen einseitig offenen Rahmen mit einer Rahmenöffnung, die vollständig durch die jeweilige der Trägerkonstruktion 5-1, 5-2 zugeordnete flexible Plane 9-1, 9-2 überdeckt ist. Der Rahmen ist insbesondere firstseitig offen.

Jedes Lüftungselement 3-1, 3-2 ist dachseitig über mindestens eine der Längsstrebe 6-1, 6-2 zugeordneten Verankerung 8-1, 8-2 schwenkbar an der Dachkonstruktion 50a, 50b des jeweiligen Gebäudedaches befestigt. Weiterhin ist jedes Lüftungselement 3-1, 3-2 firstseitig über ein jeweils ein Stellglied 10-1, 10-2 mit einem eigenen Antrieb gekoppelt. Insbesondere ist dem firstseitiges Bereich der Lüftungselemente 3-1, 3-2 jeweils mindestens eine Zahnstange 12-1, 12-2 zugeordnet, die jeweils über eine Antriebswelle 14-1, 14-2 motorisch angetrieben wird. Über die Antriebswelle 14-1, 14-2 wird die Zahnstange 12-1, 12-2 bewegt und führt entsprechend zum Öffnen oder Verschließen des jeweiligen Lüftungselements 3-1, 3-2. Über die nach oben gerichtete Schwenkbewegung von mindestens einem der Lüftungselemente 3-1, 3-2 wird eine nach oben offene Entlüftungsöffnung 20 gebildet (vgl. Figur 1).

Bei der Planenhalle gemäß Figur 1 ist die Verankerung 8-1, 8-2 der Längsstrebe 6-1, 6-2 und die dachseitige Verankerung 16-1, 16-2 der Plane jeweils direkt an der Dachkonstruktion 50a des Gebäudedaches befestigt. Die Antriebswellen 14-1, 14-2 sind ebenfalls an der Dachkonstruktion 50a befestigt. Dagegen sind bei der Holzhalle gemäß Figur 2 jeweils zusätzliche Befestigungselemente 18-1, 18-2 vorgesehen, die auf der Dachkonstruktion 50b angeordnet sind. Die Antriebswellen 14-1, 14-2 können dadurch nicht an der Dachkonstruktion 50a befestigt und abgestützt werden. Aus diesem Grund ist eine Stützkonstruktion 30 vorgesehen, die mittig ein Trägerelement 32 umfasst, auf dem eine Halterung 33-1, 33-2 für die Antriebswellen 14-1, 14-2 angeordnet sind.

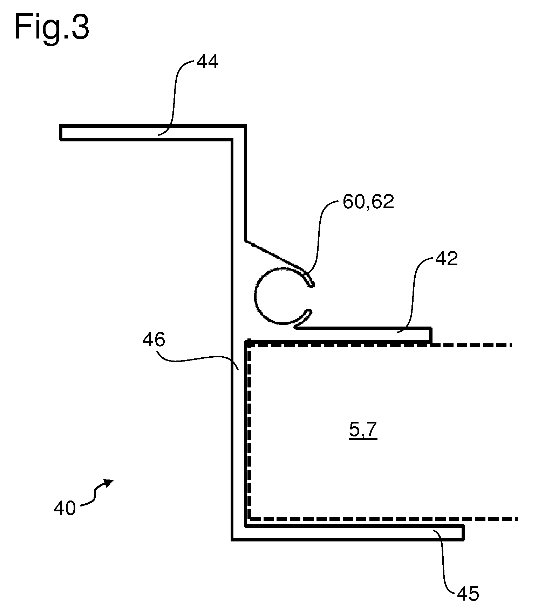

Figur 3 zeigt ein Fixierelement 40 für die flächige Bespannung der Trägerkonstruktion 5 der Lüftungselemente eines Firstsystems (nicht dargestellt) gemäß vorliegender Erfindung. Das Fixierelement 40 ist insbesondere ein so genanntes Z- Profil mit einem zusätzlichen Mittelsteg 42. Der Mittelsteg 42 ist parallel zur Oberlinie 44 und zur Unterlinie 45 des Z angeordnet. Insbesondere befindet sich der Mittelsteg 42 auf derselben Seite der mittleren Verbindungslinie 46 wie Unterlinie 45 des Z. Das Fixierelement 40 wird auf die Querstrebe 7 der Trägerkonstruktion 5 des Lüftungselements 3 so aufgesteckt, dass die Querstrebe 7 zwischen dem zusätzlichen Mittelsteg 42 und der Unterlinie 46 des Z angeordnet ist. Dem zusätzlichen Mittelsteg 42 ist oberhalb, zwischen Mittelsteg 42 und Verbindungslinie 46 ein Halteelement 60, insbesondere eine Kederhalterung 62, zugeordnet. Das Fixierelement 40 wird so an dem firstseitigen Ende der Querstrebe 7 angeordnet, dass sich die Kederhalterung 62 auf der Oberseite des Lüftungselements befindet, so dass die flexible Plane (nicht dargestellt) außenseitig die Trägerkonstruktion 5 bespannt.

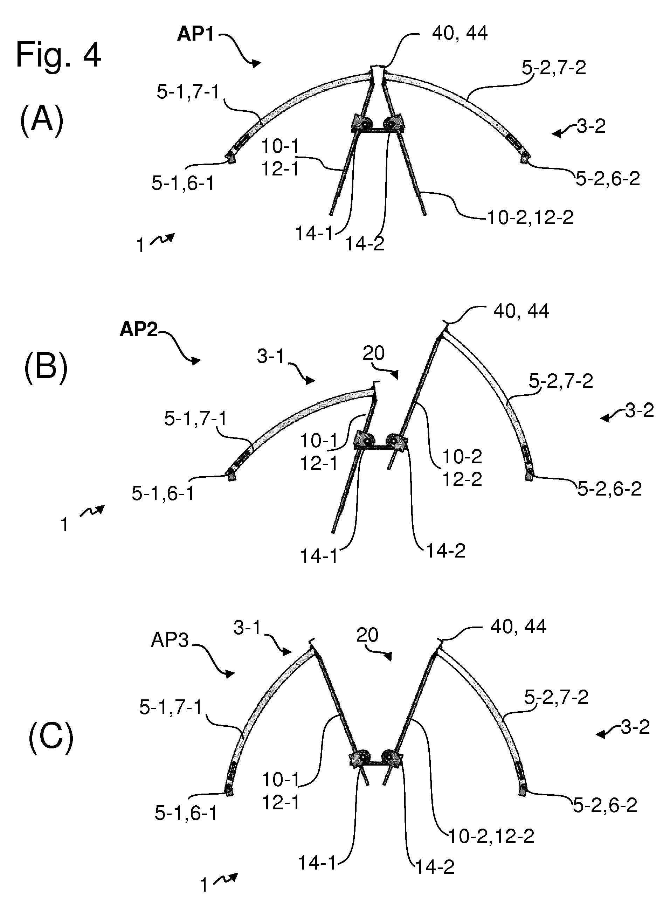

Figuren 4 zeigen verschiedene Positionen der Lüftungselemente 3-1, 3-2 eines Firstsystems 1 gemäß vorliegender Erfindung. Zur Erklärung einzelner Bezugszeichen wird insbesondere auch auf die Beschreibung der Figuren 1 und 2 verwiesen. In einer ersten in Figur 4A dargestellten Arbeitsposition AP1 sind die beiden Lüftungselemente 3-1, 3-2 in einer ersten Ausgangsposition und bedecken den Dachfirst komplett. Insbesondere wird der Dachfirst durch die Oberlinien 44 der Z- förmigen Fixierelemente 40 an den firstseitigen Enden der Querstreben 7-1, 7-2 der Trägerkonstruktion 5-1, 5-2 gebildet.

Über eine Bewegung der Antriebswelle 14-2 wird die Zahnstange 12-2 nach oben geschoben, wodurch das Lüftungselement 3-2 um die Längsstrebe 6-2 geschwenkt wird. Somit wird der firstseitige Bereich des Lüftungselements 3-2 in eine zweite Arbeitsposition AP2 des Firstsystems 1 angehoben und eine obere Luftöffnung 20 freigegeben (Figur 4B).

Über eine Bewegung der Antriebswelle 14-1 wird die Zahnstange 12-1 nach oben geschoben, wodurch das Lüftungselement 3-1 um die Längsstrebe 6-1 geschwenkt wird. Somit wird der firstseitige Bereich des Lüftungselements 3-1 in eine dritte Arbeitsposition AP3 des Firstsystems 1 angehoben, wodurch die obere Luftöffnung 20 weiter vergrößert wird (Figur 4C).

Die Bewegung der Antriebswellen 14-1, 14,2 und somit die Einstellung der Positionen der Lüftungselemente 3-1, 3-2 kann auch gleichzeitig erfolgen. Die Einstellung der Lüftungselemente 3-1, 3-2 erfolgt dabei unabhängig voneinander. Insbesondere ist die Bewegung der Lüftungselemente 3-1, 3-2 nicht gekoppelt. Es ist für den Fachmann klar, dass jede beliebige Zwischenposition zwischen der ersten geschlossenen Arbeitsposition AP1 und der vollständig geöffneten Arbeitsposition AP3 eingestellt werden kann, wobei die Lüftungselemente 3-1, 3-2 jeweils dieselben oder aber unterschiedliche Öffnungswinkel einnehmen können.

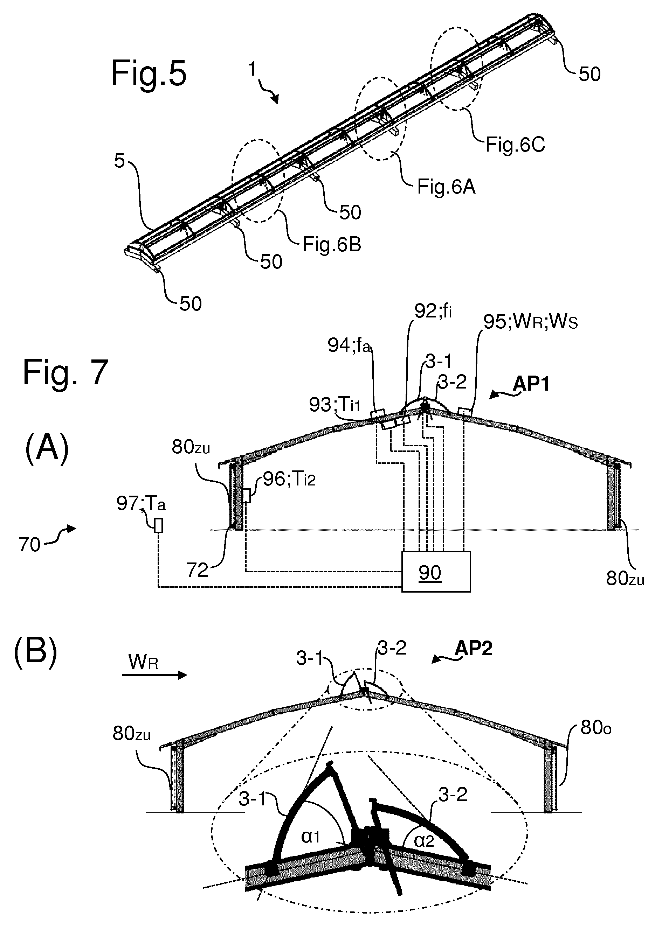

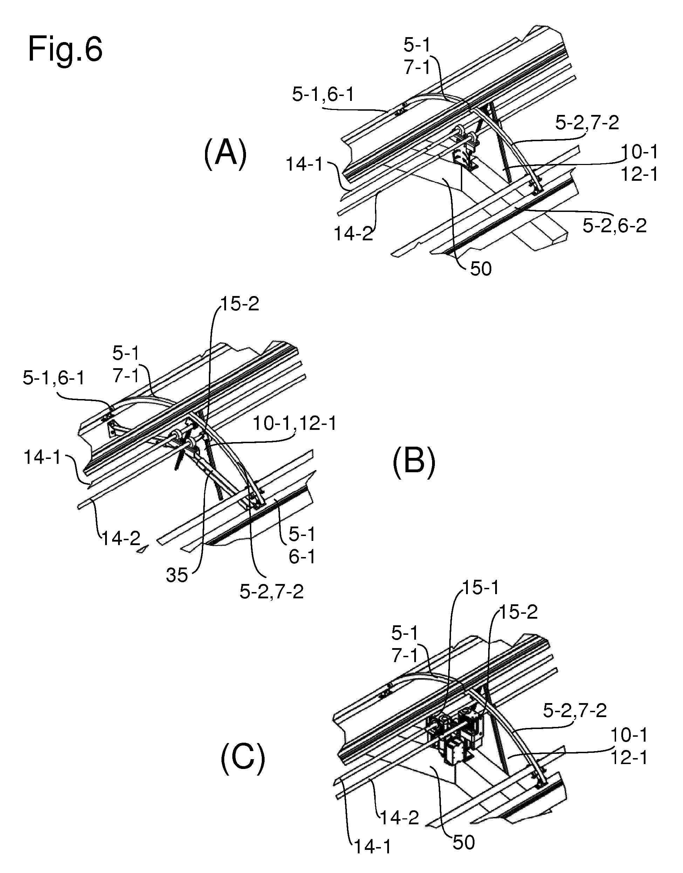

Figur 5 zeigt eine seitliche Darstellung der Trägerkonstruktion 5 und Antriebsvorrichtung eines Firstsystems 1 gemäß vorliegender Erfindung und die Figuren 6 zeigen verschiedene Detailansichten der Trägerkonstruktion und Antriebsvorrichtung eines Firstsystems gemäß vorliegender Erfindung. Das Firstsystem 1 wird vorzugsweise im Bereich der Kontaktstellen von den Querstreben 7-1, 7-2 und den Längsstreben 6-1, 6-2 der Trägerkonstruktion 5-1, 5-2 direkt an Elementen der Dachkonstruktion 50 des Gebäudedaches befestigt (Figur 6A).

Allerdings sind die Abstände zwischen den Elementen der Dachkonstruktion 50 des Gebäudedaches - die so genannten Binderabstände - häufig sehr groß, so dass weitere Querstreben 7-1, 7-2 benötigt werden, um die flexible Plane (nicht dargestellt, vgl. Figuren 1 und 2) ausreichend zu unterstützen. Hierfür sind in Zwischenbereichen zwischen den Längsstreben 6-1, 6-2 der Trägerkonstruktionen 5-1, 5-2 jeweils Zwischenkonstruktionen 35 vorgesehen, an denen die Antriebswellen 14-1, 14-2 zusätzlich gehaltert sind. (vgl. Figur 6B). Dadurch werden die Antriebswellen 14-1, 14-2 in den Bereichen, in denen die Zahnstangen 12-1, 12-2 mit den Antriebswellen 14-1, 14-2 in Kontakt stehen, stabilisiert.

In einem der Bereiche, in denen das Firstsystem 1 direkt an Elemente der Dachkonstruktion 50 des Gebäudedaches befestigt ist, insbesondere in einem mittleren Bereich, sind auch die jeweiligen Antriebe 15-1, 15-2 angeordnet (vgl. Fig.5 und Detail in Figur 6C). Diese drehen die jeweilig zugeordnete Antriebswelle 14-1, 14-2, wodurch über die jeweils zugeordnete Zahnstange 12-1, 12-2 das entsprechende Lüftungselement angehoben oder abgesenkt wird.

Figuren 7 zeigen die Anordnung eines Firstsystems 1 auf einem landwirtschaftlichen Gebäude 70. Das Gebäude 70 ist beispielsweise eine große Halle mit teilweise offenen Seitenwänden 72 und einer Dachkonstruktion 74. Die offenen Seitenflächen der Seitenwände 72 können durch Windschutzvorrichtungen 80 verschlossen werden. Als Windschutzvorrichtungen 80 werden beispielsweise nach oben und / oder unten öffnenbare Rolltore o.ä. verwendet. Im Firstbereich der Dachkonstruktion 74 ist die Dachfläche nicht mit einer Dachabdeckung versehen. Stattdessen ist im Firstbereich das erfindungsgemäße Firstsystem 1 angeordnet.

Figur 7A zeigt ein Gebäude 70, bei dem alle Öffnungen durch die jeweiligen Systeme, insbesondere durch Windschutzvorrichtungen 80 und das Firstsystem 1, verschlossen sind. Somit erfolgt kein Luftaustausch zwischen Innenraum des Gebäudes 70 und der äußeren Umgebung. Die Lüftungselemente 3-1, 3-2 des Firstsystems 1 befinden sich in der ersten geschlossenen Arbeitsposition AP1 (vgl. auch Figur 4A). Auch die Windschutzvorrichtungen 80 sind verschlossen (= 80zu). Figur 7B zeigt ein Gebäude 70, bei dem sich die Lüftungselemente 3-1, 3-2 des Firstsystems 1 in der zweiten teilweise geöffneten Arbeitsposition AP2 befinden (vgl. auch Figur 4B). Zudem ist eine der dargestellten Windschutzvorrichtungen 80 geöffnet (= 80o).

Der Öffnungszustand des Firstsystems 1 und der Windschutzvorrichtungen 80 wird über eine gemeinsame Steuerungseinheit 90 reguliert. Diese wertet Daten aus, die von unterschiedlichen Sensoren ermittelt werden und steuert daraufhin die Antriebe (nicht dargestellt) des Firstsystems 1 und der Windschutzvorrichtungen 80 an und stellt die Lüftungselemente 3-1, 3-2 des Firstsystems und die Windschutzvorrichtungen 80 entsprechend ein, so dass eine optimale Belüftung des Gebäudes 70 erfolgt. Dabei ist die Positionierung jedes Lüftungselementes 3-1, 3-2 des Firstsystems 1 zwar unabhängig vom anderen einstellbar. Stattdessen erfolgt die Positionierung abhängig von extern ermittelten physikalischen Parametern.

Beispielsweise sind ein Feuchtigkeitssensor 92 und ggf. zusätzlich ein Temperatursensor 93 innerhalb des Gebäudes 70 im Bereich des Dachfirsts und ein weiterer Temperatursensor 96 im unteren Bereich der Seitenwände 72 angeordnet. Werden über diese Sensoren 92, 93, 96 die Informationen, dass eine erhöhte Luftfeuchtigkeit fi und / oder Temperatur Tᵢ₁ im Bereich des Dachfirsts bzw. eine erhöhte Temperatur Tᵢ₂ im unteren bodennahen Bereich vorherrscht, an die Steuerungseinheit 90 übermittelt, wird in der Steuerungseinheit 90 ein vordefiniertes Programm aktiviert, dass beispielsweise die Entlüftungsöffnung im Firstbereich durch Aufschwenken der Lüftungselemente 3-1, 3-2 des Firstsystems 1 vergrößert. Zusätzlich können die Windschutzvorrichtungen 80 angesteuert und weiter geöffnet werden.

Weiterhin kann außerhalb des Gebäudes 70, beispielsweise auf dem Gebäudedach 74, ein weiterer Feuchtigkeitssensor 94 und / oder ein Windsensor 95 zur Ermittlung der Windstärke Ws und / oder Windrichtung W_{R} angeordnet sein. Ermittelt der Feuchtigkeitssensor 94 eine erhöhte Luftfeuchtigkeit fₐ, wie dies beispielsweise bei Regen der Fall ist, werden die Lüftungselemente 3-1, 3-2 in Richtung Dachfirst zurückgeschwenkt, wodurch die Entlüftungsöffnung des Firstsystems 1 verringert oder verschlossen wird.

Ermittelt der an der Außenseite des Gebäudes 70 zugeordnete Windsensor 95 einen starken Wind aus einer bestimmten Windrichtung W_{R}, so muss das Lüftungselement 3-2 auf der windabgewandten Seite des Gebäudes 70 weiter geschlossen werden als das Lüftungselement 3-1 auf der windzugewandten Seite. Insbesondere wird ein Öffnungswinkel α2 des Lüftungselements 3-2 eingestellt, der kleiner ist als der Öffnungswinkel α1 des Lüftungselements 3-1 auf der windzugewandten Seite des Gebäude 70. Dadurch wird verhindert, dass der Wind das Lüftungselement 3-1 auf der windabgewandten Seite nach oben hin wegreißt. Zusätzlich wird über die Steuerungseinheit 90 die Windschutzvorrichtung 80 auf der windzugewandten Seite geschlossen (= 80zu), während die Windschutzvorrichtung 80 auf der windabgewandten Seite in Abhängigkeit von der Außentemperatur zumindest teilweise oder vollständig geöffnet wird (= 80o). Zur Ermittlung der Außentemperatur Tₐ ist beispielsweise ein außerhalb des Gebäudes 70 angeordneter Temperatursensor 97 mit der Steuerungseinheit 90 gekoppelt. Ermitteltn die Sensoren 94, 95 beispielsweise starken Regen aus einer bestimmten Richtung, so wird durch die Steuerungseinrichtung 90 der Öffnungswinkel der Lüftungselemente 3-1, 3-2 entsprechend korrigiert.

Selbstverständlich können mit der Steuerungseinheit 90 die Daten aller genannten Sensoren ausgewertet werden. Alternativ ist auch denkbar, dass das System und das entsprechende Verfahren nur einen Teil der genannten Sensoren oder andere Sensoren verwendet, um die Belüftung des Gebäudes 70 optimal zu steuern.

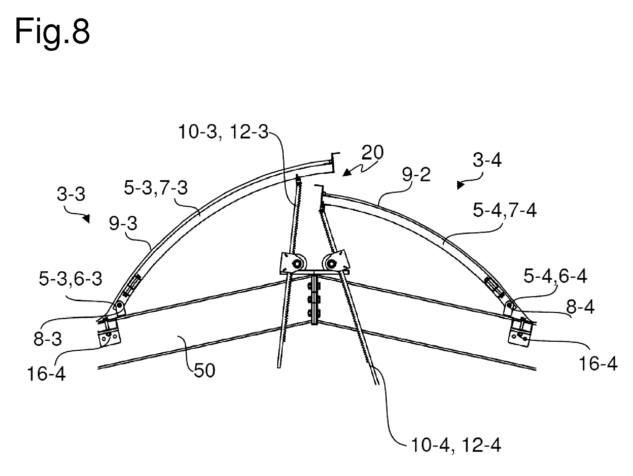

Figur 8 zeigt eine Ausführungsform eines Firstsystems 1c, in der das eine Lüftungselement 3-3 das andere Lüftungselement 3-4 zumindest teilweise überragt. Insbesondere sind die Lüftungselemente 3-3, 3-4 im Gegensatz zu den in den Figuren 1-7 dargestellten Lüftungselemente 3-1, 3-2 nicht spiegelsymmetrisch zum Dachfirst aufgebaut oder angeordnet. Gemäß der in Figur 8 dargestellten Ausführungsform sind die Querstreben 7-3 des einen ersten Lüftungselements 3-3 länger als die Querstreben 7-4 des anderen Lüftungselements 3-4. In der ersten eingenommenen Relativposition AP! (vgl. Figur 4A), in der die Lüftungselements 3-3, 3-4 miteinander eine weitgehend geschlossene Dachoberfläche bilden, überragt das erste Lüftungselement 3-3das zweite Lüftungselement 3-4 im Firstbereich somit teilweise. Die Bewegung bzw. Öffnung des zweiten Lüftungselements 3-4 ist somit von der Bewegung bzw. Öffnung des ersten Lüftungselements 3-3 zumindest teilweise abhängig, da das erste Lüftungselement 3-3 zumindest teilweise geöffnet sein muss, damit das zweite Lüftungselement 3-4 geöffnet werden kann. Eine solche Anordnung kann beispielsweise für Gebäude in Gegenden vorteilhaft sein, in der der Wind aufgrund der geographischen Lage immer aus einer bestimmten Richtung kommt.

Alternativ könnte das Lüftungselement 3-3 spiegelsymmetrisch zum Lüftungselement 3-4 aufgebaut, aber näher am Dachfirst angeordnet sein, so dass es ebenfalls zu der Überlappung im Firstbereich kommt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Firstsystem
- 3-1/3-2/3-3/3-4: Lüftungselement
- 5-1/5-2/5-3/5-4: Trägerkonstruktion
- 6-1/6-2/6-3/6-4: Längsstrebe
- 7-1/7-2/7-3/7-4: Querstrebe
- 8: Verankerung
- 9-179-2/9-3/9-4: Plane
- 10-1/10-2/10-3/10-4: Stellglied
- 12-1/12-2/12-3/12-4: Zahnstange
- 14-1/14-2: Antriebswelle
- 15-1/15-2: Antrieb
- 16-1/16-2: dachseitige Verankerung der Plane
- 18-1/18-2/18-3/18-4: Befestigungselement
- 20: Entlüftungsöffnung
- 30: Stützkonstruktion
- 32: Trägerelement
- 33-1/33-2: Halterung
- 35: Stützkonstruktion
- 40,40-1/40-2: Fixierelement
- 42: Mittelsteg
- 44: Oberlinie
- 45: Unterlinie
- 46: Verbindungslinie
- 50; 50a/50b: Dachkonstruktion des Gebäudedaches
- 60: Halteelement
- 62: Kederhalterung
- 70: Gebäude
- 72: seitliche Gebäudewand
- 74: Dachkonstruktion
- 80: Windschutz
- 80zu/80o: Windschutz geschlossen / Windschutz zumindest teilweise offen
- 90: Steuerungseinheit
- 92 - 97: Sensoren

- α1/α2: Öffnungswinkel
- AP1/AP2/AP3: erste / zweite / dritte Arbeitsposition
- fi/fa: Feuchtigkeit innen / Feuchtigkeit außen
- Tᵢ/Tₐ: Temperatur innen / Temperatur außen
- W_{R}/W_{S}: Windrichtung / Windstärke

## Patentansprüche

1. Landwirtschaftliches Gebäude (70) mit einem Firstsystem (1) mit zwei einander gegenüberliegend angeordneten, zumindest teilweise den Firstbereich des Gebäudedaches (74) bildenden Lüftungselementen (3-1, 3-2), die jeweils um eine eigene Achse schwenkbeweglich gelagert sind und bei einer ersten eingenommenen Relativposition (AP1) miteinander eine weitgehend geschlossene Dachoberfläche bilden, sowie bei mindestens einer zweiten eingenommenen Relativposition (AP2, AP3) miteinander eine Entlüftungsöffnung (20) ausbilden, wobei die Lüftungselemente (3-1, 3-2) jeweils aus einer Trägerkonstruktion (5-1, 5-2) bestehen, die mit einer flexiblen Flächenbahn (9-1, 9-2) bespannt ist, **dadurch gekennzeichnet, dass** die Trägerkonstruktion (5-1, 5-2) eines Lüftungselementes (3-1, 3-2) jeweils als einseitig offener Rahmen ausgebildet ist und aus einer dachseitig angeordneten Längsstrebe (6-1, 6-2) und jeweils mindestens zwei orthogonal zur Längsstrebe (6-1, 6-2) angeordneten Querstreben (7-1, 7-2) besteht und das Gebäude weiter mindestens eine großflächige seitliche Öffnung umfasst, wobei der seitlichen Öffnung eine einstellbare Windschutzvorrichtung (80) zugeordnet ist.

2. Landwirtschaftliches Gebäude (70) nach Anspruch 1, wobei die Querstreben (7-1, 7-2) gebogen ausgebildet, insbesondere wobei die Querstreben (7-1, 7-2) jeweils eine nach außen weisende konvexe Krümmung über ihre gesamte Länge aufweisen, wobei die über die Querstreben (7-1, 7-2) gespannte flexiblen Flächenbahn (9-1, 9-2) eine konvex gekrümmte Außenfläche bildet.

3. Landwirtschaftliches Gebäude (70) nach Anspruch 1 oder 2, wobei die Flächenbahn (9-1, 9-2) lösbar an der Trägerkonstruktion (5-1, 5-2) der Lüftungselemente (3-1, 3-2) befestigt ist.

4. Landwirtschaftliches Gebäude (70) nach Anspruch 3, wobei die jeweilige flexible Flächenbahn (9-1, 9-2) wenigstens ein erstes Fixierelement umfasst, welches zur Bespannung ihrer zugeordneten Trägerkonstruktion (5-1, 5-2) in ein korrespondierendes Fixierelement (40) der Trägerkonstruktion (5-1, 5-2) einsetzbar oder einführbar ist.

5. Landwirtschaftliches Gebäude (70) nach Anspruch 4, wobei das erste Fixierelement der jeweiligen flexiblen Flächenbahn (9-1, 9-2) ein Keder ist und wobei jede Querstrebe (7-1, 7-2) an ihrem firstseitigen freien Ende ein Fixierelement (40) mit einem Halteelement (60, 62) für den Keder umfasst und wobei der Keder einer Flächenbahn (9-1, 9-2) durch alle Halteelemente (60, 62) aller der Längsstrebe (6-1, 6-2) eines Lüftungselementes (3-1, 3-2) zugeordneten Querstreben (7-1, 7-2) geführt und gehaltert ist.

6. Landwirtschaftliches Gebäude (70) nach einem der voranstehenden Ansprüche, wobei die Trägerkonstruktionen (5-1, 5-2) jeweils eine Längsstrebe (6-1, 6-2) und eine Mehrzahl von Querstreben (7-1, 7-2) umfassen, wobei die jeweiligen Längs- und Querstreben (5-1, 5-2, 7-1, 7-2) gemeinsam einen Rahmen mit resultierender Rahmenöffnung bilden, die vollständig durch die jeweilige der Trägerkonstruktion (5-1, 5-2) zugeordnete flexible Flächenbahn (9-1, 9-2) überdeckt ist.

7. Landwirtschaftliches Gebäude (70) nach einem der voranstehenden Ansprüche, wobei die einander gegenüberliegend angeordneten Lüftungselemente (3-1, 3-2) unabhängig voneinander schwenkbar und unabhängig voneinander ansteuerbar und einstellbar sind.

8. Landwirtschaftliches Gebäude (70) nach einem der voranstehenden Ansprüche, wobei die Querstreben (7-3) der Trägerkonstruktion (5-3) des einen Lüftungselements (3-3) in der ersten eingenommenen Relativposition (AP1), in der die Lüftungselemente (3-3, 3-4) miteinander eine weitgehend geschlossene Dachoberfläche bilden, das gegenüberliegend angeordnete Lüftungselement (3-4) zumindest teilweise überragen.

9. Landwirtschaftliche Gebäude (70) nach einem der voranstehenden Ansprüche, wobei innerhalb und / oder außerhalb des Gebäudes (70) Sensoren (92, 93, 94, 95, 96, 97) vorgesehen sind und wobei dem Gebäude (70) eine Steuerungseinheit (90) zugeordnet ist, die mit den Sensoren (92, 93, 94, 95, 96, 97) gekoppelt ist und über die die Öffnungsgröße der mindestens einen seitlichen Öffnung und / oder der Lüftungsöffnung (20) im Firstbereich einstellbar ist.

10. System zur Steuerung der Belüftung eines landwirtschaftlichen Gebäudes (70) nach einem der Ansprüche 1 bis 9, das mindestens einen Sensor (92, 93, 94, 95, 96, 97) und mindestens eine Steuerungseinheit (90) umfasst, wobei der mindestens eine Sensor (92, 93, 94, 95, 96, 97) in und / oder außerhalb des Gebäudes (70), dem Gebäude (70) zugeordnet, angeordnet ist und mit der Steuerungseinheit (90) gekoppelt ist und wobei die Lüftungselemente (3-1, 3-2) des Firstsystems (1) über die Steuerungseinheit (90) unabhängig voneinander ansteuerbar und einstellbar sind.

11. Verfahren zur Steuerung der Belüftung eines landwirtschaftlichen Gebäudes (70) nach einem der Ansprüche 1 bis 9, wobei physikalische Parameter in und / oder außerhalb des Gebäudes (70) ermittelt werden und daraufhin mindestens eines der Lüftungselemente (3-1, 3-2) des Firstsystems (1) und / oder die mindestens eine seitlich angeordnete Windschutzvorrichtung (80) angesteuert wird.

## Claims

1. An agricultural building (70) with a roof ridge system (1) with two ventilation elements (3-1, 3-2) arranged to be located opposite each other and at least partially forming the roof ridge section of the roof of the building (74), which ventilation elements (3-1, 3-2) are each mounted to be pivotably movable about an own axis and form a largely continuous roof surface when taking a first relative position (AP1) to one another, and which form a ventilation opening (20) when taking at least a second relative position (AP2, AP3) to one another, wherein the ventilation elements (3-1, 3-2) each consist of a support structure (5-1, 5-2), which has a flexible plane sheet (9-1, 9-2) stretched over it, **characterised in that** the support structure (5-1, 5-2) of a ventilation element (3-1, 3-2) is, in each case, formed as a frame, which is open on one side, and which consists of a longitudinal bracing member (6-1, 6-2) arranged on the side toward the roof and, in each case, of at least two cross-bracing members (7-1, 7-2) arranged orthogonally to the longitudinal bracing member (6-1, 6-2), and wherein the building further comprises at least one large lateral opening, wherein an adjustable draft shield fixture (80) is assigned to the lateral opening.

2. The agricultural building (70) as recited in claim 1 wherein the cross-bracing members (7-1, 7-2) are formed to be bent, in particular wherein the cross-bracing members (7-1, 7-2) each have an outwardly facing, convex curvature over their entire length, wherein the flexible plane sheet (9-1, 9-2), which is stretched over the cross-bracing members (7-1, 7-2), forms a convexly curved outer surface.

3. The agricultural building (70) as recited in claim 1 or 2 wherein the plane sheet (9-1, 9-2) is detachably fastened to the support structure (5-1, 5-2) of the ventilation elements (3-1, 3-2).

4. The agricultural building (70) as recited in claim 3 wherein the flexible plane sheet (9-1, 9-2) comprises at least one first fixing element, which is introduceable or insertable into a corresponding fixing element (40) of the support structure (5-1, 5-2) for the purpose of stretching the respective plane sheet (9-1, 9-2) over its assigned support structure (5-1, 5-2).

5. The agricultural building (70) as recited in claim 4 wherein the first fixing element of the respective flexible plane sheet (9-1, 9-2) is a keder and wherein each cross-bracing member (7-1, 7-2) at its free end on the side of the roof ridge comprises a fixing element (40) with a holding element (60, 62) for the keder and wherein the keder of a plane sheet (9-1, 9-2) is passed through and mounted by way of all holding elements (60, 62) of all cross-bracing members (7-1, 7-2) assigned to the longitudinal bracing member (6-1, 6-2) of a ventilation element (3-1, 3-2).

6. The agricultural building (70) as recited in one of the previous claims wherein the support structures (5-1, 5-2) each comprise a longitudinal bracing member (6-1, 6-2) and a plurality of cross-bracing members (7-1, 7-2), wherein the respective longitudinal and cross-bracing members (5-1, 5-2, 7-1, 7-2) together form a frame with a resulting frame opening, which is completely covered by the respective flexible plane sheet (9-1, 9-2) assigned to the support structure (5-1, 5-2).

7. The agricultural building (70) as recited in one of the previous claims wherein the ventilation elements (3-1, 3-2), which are arranged to be located opposite each other, are pivotable independently of one another and adjustable independently of one another.

8. The agricultural building (70) as recited in one of the previous claims wherein the cross-bracing members (7-3) of the support structure (5-3) of the one ventilation element (3-3) at least partially project above the ventilation element (3-4), which is arranged to be located opposite, when the ventilation element (3-3) takes the first relative position (AP1), in which the ventilation elements (3-3, 3-4) together form a largely continuous roof surface.

9. The agricultural building (70) as recited in one of the previous claims wherein sensors (92, 93, 94, 95, 96, 97) are provided inside and/or outside of the building (70) and wherein a control unit (90) is assigned to the building (70), which control unit (90) is coupled with the sensors (92, 93, 94, 95, 96, 97) and by means of which control unit (90) the size of the opening of the at least one lateral opening and/or of the ventilation opening (20) in the roof ridge section is adjustable.

10. A system for controlling the ventilation of an agricultural building (70) as recited in one of the claims 1 to 9, which system comprises at least one sensor (92, 93, 94, 95, 96, 97) and at least one control unit (90), wherein the at least one sensor (92, 93, 94, 95, 96, 97) is assigned to the building (70), is arranged inside and/or outside of the building (70), and is coupled with the control unit (90), and wherein the ventilation elements (3-1, 3-2) of the roof ridge system (1) are controllable and adjustable independently of each other by means of the control unit (90).

11. A method for controlling the ventilation of an agricultural building (70) as recited in one of the claims 1 to 9 wherein physical parameters are determined inside and/or outside of the building (70) and, as a result, at least one of the ventilation elements (3-1, 3-2) of the roof ridge system (1) and/or the at least one laterally arranged draft shield fixture (80) is controlled.

## Revendications

1. Bâtiment agricole (70) comprenant un système de faîtage (1) ayant deux éléments d'aération (3-1, 3-2) qui sont disposés en regard l'un de l'autre et forment au moins en partie la zone de faîtage du toit de bâtiment (74) et qui sont logés chacun de manière mobile à pivotement sur un propre axe et forment l'un avec l'autre, dans une première position relative (AP1) occupée, une surface de toit dans une large mesure fermée, et forment l'un avec l'autre, dans au moins une deuxième position relative (AP2, AP3) occupée, une ouverture de ventilation (20), les éléments d'aération (3-1, 3-2) se composant chacun d'une construction porteuse (5-1, 5-2) qui est recouverte d'une bande de surface (9-1, 9-2) flexible, **caractérisé par le fait que** ladite construction porteuse (5-1, 5-2) d'un élément d'aération (3-1, 3-2) est réalisée respectivement en tant que cadre ouvert d'un côté et se compose d'une contre-fiche longitudinale (6-1, 6-2) disposée côté toit et respectivement d'au moins deux contre-fiches transversales (7-1, 7-2) disposées orthogonalement à ladite contre-fiche longitudinale (6-1, 6-2), et que le bâtiment comprend en outre au moins une ouverture latérale de grande surface, à ladite ouverture latérale étant associé un dispositif brise-vent (80) réglable.

2. Bâtiment agricole (70) selon la revendication 1, dans lequel les contre-fiches transversales (7-1, 7-2) sont réalisées courbées, en particulier dans lequel les contre-fiches transversales (7-1, 7-2) présentent, sur l'ensemble de leur longueur, une courbure convexe montrant vers l'extérieur, la bande de surface (9-1, 9-2) flexible tendue sur les contre-fiches transversales (7-1, 7-2) formant une surface extérieure courbée de manière convexe.

3. Bâtiment agricole (70) selon la revendication 1 ou 2, dans lequel la bande de surface (9-1, 9-2) est fixée de manière amovible sur la construction porteuse (5-1, 5-2) des éléments d'aération (3-1, 3-2).

4. Bâtiment agricole (70) selon la revendication 3, dans lequel la bande de surface (9-1, 9-2) flexible respective comprend au moins un premier élément de fixation qui, pour recouvrir sa construction porteuse (5-1, 5-2) associée, peut être inséré ou introduit dans un élément de fixation (40) correspondant de la construction porteuse (5-1, 5-2).

5. Bâtiment agricole (70) selon la revendication 4, dans lequel ledit premier élément de fixation de la bande de surface (9-1, 9-2) flexible respective est un bourrelet et dans lequel chaque contre-fiche transversale (7-1, 7-2) comprend, à son extrémité libre côté faîtage, un élément de fixation (40) ayant un élément de maintien (60, 62) pour le bourrelet, et dans lequel le bourrelet d'une bande de surface (9-1, 9-2) est guidé et maintenu par l'ensemble des éléments de maintien (60, 62) de toutes les contre-fiches transversales (7-1, 7-2) associées à la contre-fiche longitudinale (6-1, 6-2) d'un élément d'aération (3-1, 3-2).

6. Bâtiment agricole (70) selon l'une quelconque des revendications précédentes, dans lequel les constructions porteuses (5-1, 5-2) comprennent chacune une contre-fiche longitudinale (6-1, 6-2) et une pluralité de contre-fiches transversales (7-1, 7-2), dans lequel les contre-fiches longitudinales et transversales (5-1, 5-2, 7-1, 7-2) respectives forment ensemble un cadre ayant une ouverture de cadre résultante qui est recouverte complètement par la bande de surface (9-1, 9-2) flexible respective associée à la construction porteuse (5-1, 5-2).

7. Bâtiment agricole (70) selon l'une quelconque des revendications précédentes, dans lequel les éléments d'aération (3-1, 3-2) disposés en regard l'un de l'autre peuvent pivoter indépendamment l'un de l'autre et être commandés et réglés indépendamment l'un de l'autre.

8. Bâtiment agricole (70) selon l'une quelconque des revendications précédentes, dans lequel, dans la première position relative (AP1) occupée dans laquelle les éléments d'aération (3-3, 3-4) forment l'un avec l'autre une surface de toit dans une large mesure fermée, les contre-fiches transversales (7-3) de la construction porteuse (5-3) de l'un (3-3) des éléments d'aération surplombent au moins en partie l'élément d'aération (3-4) disposé en regard.

9. Bâtiment agricole (70) selon l'une quelconque des revendications précédentes, dans lequel des capteurs (92, 93, 94, 95, 96, 97) sont prévus à l'intérieur et / ou à l'extérieur du bâtiment (70), et dans lequel une unité de commande (90) est associée au bâtiment (70), qui est couplée aux capteurs (92, 93, 94, 95, 96, 97) et par le biais de laquelle on peut régler la taille d'ouverture de ladite au moins une ouverture latérale et / ou de l'ouverture de ventilation (20) dans la zone de faîtage.

10. Système de commande de la ventilation d'un bâtiment agricole (70) selon l'une quelconque des revendications 1 à 9, qui comprend au moins un capteur (92, 93, 94, 95, 96, 97) et au moins une unité de commande (90), dans lequel ledit au moins un capteur (92, 93, 94, 95, 96, 97) est disposé à l'intérieur et / ou à l'extérieur du bâtiment (70), en étant associé au bâtiment (70), et est couplé à ladite unité de commande (90), et dans lequel les éléments d'aération (3-1, 3-2) du système de faîtage (1) peuvent être commandés et réglés indépendamment l'un de l'autre par ladite unité de commande (90).

11. Procédé de commande de la ventilation d'un bâtiment agricole (70) selon l'une quelconque des revendications 1 à 9, dans lequel des paramètres physiques sont déterminés à l'intérieur et / ou à l'extérieur du bâtiment (70), et, après cela, l'un au moins des éléments d'aération (3-1, 3-2) du système de faîtage (1) et / ou ledit au moins un dispositif brise-vent (80) disposé latéralement est commandé.
